# EUROPEAN PATENT APPLICATION

(11) **EP 4 549 090 A1**
(43) Date of publication of application: **07.05.2025**
(21) Application number: 24211003.9
(22) Date of filing: 05.11.2024
(51) Int. Cl.: B24B 37/22, B24B 37/24, C08G 18/10, C08G 18/32, C08G 18/38, C08G 18/48, C08G 18/66, C08G 18/72, C08G 18/75, C08G 18/76, C08J 9/32, C10G 1/10, C10G 3/00

(54) **POLISHING PAD WITH EXCELLENT RECYCLABILITY AND PYROLYSIS OIL OBTAINED THEREFROM**

(30) Priority: 06.11.2023 KR 20230152066
(71) Applicant: SK enpulse Co., Ltd., Pyeongtaek-si, Gyeonggi-do 17784 (KR)
(72) Inventor: KIM, Younghwan, 17784 Pyeongtaek-si (KR); YOON, Jongwook, 17784 Pyeongtaek-si (KR); SEO, Jangwon, 17784 Pyeongtaek-si (KR)
(74) Representative: Dehns

(57) **Abstract**

The embodiment relates to a polishing pad that comprises a polishing layer. When pyrolysis oil obtained by pyrolyzing the polishing layer at 320°C for 6 hours is analyzed by combustion-ion chromatography (C-IC) in accordance with the IEC 62321-3-2 standard, the content of chlorine (Cl) is less than 10,000 ppm. Further, the pyrolysis oil can be used as a high-quality energy source through a refining process.

## Description

### Technical Field

Embodiments relate to a polishing pad for use in a chemical mechanical planarization (CMP) process of semiconductor devices and to pyrolysis oil obtained from the polishing pad.

### Background Art

The chemical mechanical planarization (CMP) process in a process for preparing semiconductors refers to a step in which a semiconductor substrate such as a wafer is fixed to a head and in contact with the surface of a polishing pad mounted on a platen, and the platen and the head are relatively moved to planarize the irregularities on the surface of the semiconductor substrate.

In such a CMP process, the polishing pad is required to have stable physical properties because it greatly affects the surface processing quality of the semiconductor substrate. In particular, since the polishing rate of the CMP process may vary sensitively depending on the components contained in the polishing pad and their physical properties, it is necessary to optimize the components contained in the polishing pad and their physical properties.

Meanwhile, as the severity of environmental problems has recently emerged, attempts have been made to recycle used polishing pads. However, it is difficult to process polishing pads for recycling (for example, melt processing using heat), and discarded polyurethane polishing pads do not decompose, causing environmental problems. Accordingly, attempts have been made to use pyrolysis oil recovered through the pyrolysis of waste polishing pads as an energy source or to prepare a polyol, a raw material for polishing pads, for the regeneration of polishing pads. Meanwhile, polishing pads commonly contain highly toxic halogen elements such as chlorine, which remain even after thermal decomposition, making recycling difficult.

Accordingly, there is a need to develop a technology on a polishing pad that is excellent in its overall physical properties and performance in a CMP process and that has high recyclability through thermal decomposition after use.

### Prior Art Document

(Patent Document 1) Korean Laid-open Patent Publication No. 2009-0029336

### Disclosure of Invention

### Technical Problem

As a result of research conducted by the present inventors to solve the above conventional problems, it is possible to achieve a polishing pad in which the content of residual chlorine upon pyrolysis of a polyurethane is controlled to a specific range. As a result, it is possible to minimize the occurrence of defects and scratches during a CMP process while maintaining the excellent physical properties and performance of the polishing pad. In addition, pyrolysis oil obtained through the pyrolysis of the polishing pad can be used as an energy source or recycled as an organic resource, such as a raw material for preparing polishing pads, whereby the environmental burden can be reduced.

Accordingly, the embodiments aim to provide a polishing pad that can have excellent physical properties by controlling the content of residual chlorine components upon pyrolysis. In addition, the embodiments aim to provide pyrolysis oil obtained by pyrolyzing the polishing pad and a process for preparing the same.

### Solution to the Problem

According to an embodiment for solving the above problem, there is provided a polishing pad that comprises a polishing layer, wherein, when pyrolysis oil obtained by pyrolyzing the polishing layer at 320°C for 6 hours is analyzed by combustion-ion chromatography (C-IC) in accordance with the IEC 62321-3-2 standard, the content of chlorine (Cl) is less than 10,000 ppm.

According to another embodiment, there is provided pyrolysis oil that is obtained from the polishing layer of the polishing pad and has a content of chlorine (Cl) of less than 10,000 ppm when the pyrolysis oil is analyzed by combustion-ion chromatography (C-IC) in accordance with the IEC 62321-3-2 standard.

### Advantageous Effects of Invention

In the polishing pad according to the embodiment, the content of chlorine remaining upon pyrolysis of the polishing layer thereof is adjusted to a certain range; thus, it is possible to minimize the occurrence of defects and scratches during a CMP process while maintaining the excellent physical properties and performance of the polishing pad. Accordingly, when a CMP process is carried out using the polishing pad, a semiconductor substrate (e.g., wafer) with excellent surface processing quality can be provided while a high polishing rate is achieved.

In addition, the pyrolysis oil according to the embodiment is obtained by pyrolyzing the polishing layer of the polishing pad and can be used as a high-quality energy source through a refining process. Accordingly, the embodiments can contribute to improving environmental problems while increasing the recycling rate of polishing pads.

### Brief Description of Drawings

Fig. 1 is a cross-sectional view of a polishing pad according to an embodiment.
Fig. 2 illustrates a process for obtaining pyrolysis oil through pyrolysis of a polishing pad.
Fig. 3 illustrates a process for obtaining energy sources and basic raw materials from pyrolysis oil.

(Reference Numeral of the Drawings - 10: polishing layer, 20: adhesive layer, 30: support layer, 100: chamber, 200: heat exchanger, 300: distillation tower)

### Best Mode for Carrying out the Invention

In the following description of the embodiments, a detailed description of known functions and configurations incorporated herein will be omitted when it is determined that the description may make the subject matter of the embodiments rather unclear. In addition, for the sake of description, the sizes of individual elements in the appended drawings may be exaggeratedly depicted or omitted, and they may differ from the actual sizes.

In the present specification, when one component is described to be formed on/under another component or connected or coupled to each other, it covers the cases where these components are directly or indirectly formed, connected, or coupled through another component. In addition, it should be understood that the criterion for the terms on and under of each component may vary depending on the direction in which the object is observed.

In this specification, terms referring to the respective components are used to distinguish them from each other and are not intended to limit the scope of the embodiment. In addition, in the present specification, a singular expression is interpreted to cover a plural number as well unless otherwise specified in the context.

Throughout the present specification, the terms first, second, and the like are used to describe various components. But the components should not be limited by the terms. The terms are used for the purpose of distinguishing one element from another.

In the present specification, the term "comprising" is intended to specify a characteristic, region, step, process, element, and component. It does not exclude the presence or addition of any other characteristic, region, step, process, element, and component, unless specifically stated to the contrary.

For convenience, the molecular weight of compounds or polymers described in the present specification is expressed in units of molar mass, but it may be understood as relative mass with reference to carbon-12. In addition, the molecular weight of compounds or polymers described in the present specification may be interpreted as a number average molecular weight or a weight average molecular weight, for example, as a number average molecular weight.

In the numerical range that limits the size, physical properties, and the like of components described in the present specification, when a numerical range limited with the upper limit only and a numerical range limited with the lower limit only are separately exemplified, it should be understood that a numerical range combining these upper and lower limits is also encompassed in the exemplary scope of the invention.

### Polishing pad

The polishing pad according to an embodiment comprises a polishing layer.

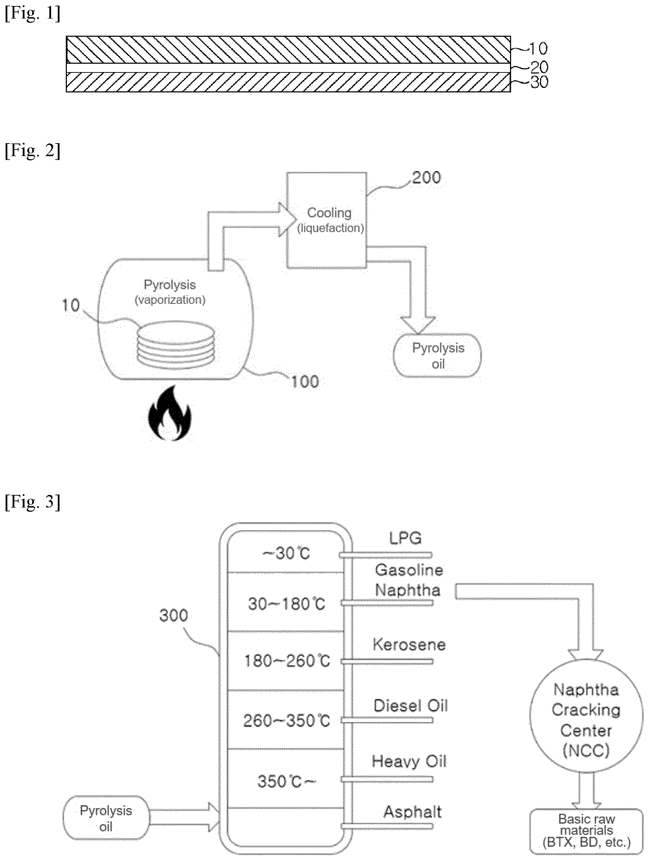

Fig. 1 is a cross-sectional view of a polishing pad according to an embodiment. Referring to Fig. 1, the polishing pad may comprise a support layer (3) under a polishing layer (10). In addition, an adhesive layer (20) may be interposed between the polishing layer and the support layer.

In an embodiment, when pyrolysis oil obtained by pyrolyzing the polishing layer at 320°C for 6 hours is analyzed by combustion-ion chromatography (C-IC) in accordance with the IEC 62321-3-2 standard, the content of chlorine (Cl) is less than 10,000 ppm.

The chlorine content of the polishing pad may be determined by preparing a circular sample having a size of 3 cm in diameter and 0.3 cm in height from the polishing layer of the polishing pad. The content of chlorine in each polishing layer may be measured by IEC 62321-3-2, which is an international standard for measuring the content of a specific substance by combustion-ion chromatography (C-IC).

The IEC 62321-3-2 standard using combustion-ion chromatography (C-IC) is a test method for screening halogen components as developed in response to regulations for halogen use. The test method has excellent precision, accuracy, and reproducibility as compared with conventional halogen analysis methods (e.g., oxygen bomb-IC and oxygen flask-IC) and is automated; thus, the reliability of the test results is excellent.

The content of chlorine in the pyrolysis oil obtained from the polishing layer of the polishing pad according to an embodiment may be less than 10,000 ppm, for example, 5,000 ppm or less, 1,000 ppm or less, 500 ppm or less, 200 ppm or less, 100 ppm or less, 80 ppm or less, 50 ppm or less, 30 ppm or less, 20 ppm or less, or 10 ppm or less. As the content of chlorine is adjusted to the above range, it is possible to reduce the size of debris while maintaining the excellent physical properties and performance of the polishing pad, thereby minimizing the occurrence of defects and scratches during a CMP process.

For the analysis of debris size, debris may be obtained as an aqueous solution. Typically, a porous polyurethane polishing pad may be attached to the platen of a CMP polishing machine. Thereafter, excluding the operation of the carrier, the debris of the polishing layer may be collected using only conditioner and deionized water (DIW). Conditioning of the polishing layer may be carried out for a disc of CI45 (pad cut rate of 80 to 90, Saesol) while deionized water is supplied at 300 cc/minute under the conditions of a platen speed of 93 rpm, a conditioner load of 9 lbs, a rotation speed of 64 rpm, and a sweep speed of 19 times/minute. The debris of the polishing layer formed after 10 minutes of conditioning may be collected in the form of a solution mixed with deionized water, thereby obtaining 300 ml of an aqueous solution of debris.

The aqueous solution of debris may have a pH at a level of 6.0 to 6.5, and the pH may be adjusted to 5.5 using an aqueous nitric acid solution. Here, the concentration of the aqueous nitric acid solution used may be 35%. The D50 particle size of debris in the aqueous solution of debris may be measured using a particle size analyzer (e.g. Mastersize 3000, Malvern) and a medium-capacity automatic disperser (e.g. Hydro MV, Malvern). The analyzer may be set with a polyurethane of 1.55 as the refractive index of a material to be analyzed, deionized water of 1.33 as the refractive index of a dispersant, and a stirring speed of 2,500 rpm.

In addition, the lower limit of the content range of chlorine in the pyrolysis oil obtained from the polishing layer of the polishing pad according to an embodiment may be, for example, 0 ppm or more, greater than 0 ppm, 1 ppm or more, 2 ppm or more, 3 ppm or more, 4 ppm or more, or 5 ppm or more. Within the above range, the surface area and adsorption force can be adjusted as the debris agglomerates into an appropriate size to facilitate adsorption and desorption in the wafer and pad, and the electrical attraction and repulsion force can be adjusted to make the polishing performance more appropriate.

As a specific example, when pyrolysis oil obtained by pyrolyzing the polishing layer at 320°C for 6 hours is analyzed by combustion-ion chromatography (C-IC) in accordance with the IEC 62321-3-2 standard, the content of chlorine (Cl) may be 1 ppm or more and less than 10,000 ppm. As another specific example, when the pyrolysis oil is analyzed by combustion-ion chromatography (C-IC) in accordance with the IEC 62321-3-2 standard, the content of chlorine (Cl) may be 1 ppm to 1,000 ppm. As another specific example, when the pyrolysis oil is analyzed by combustion-ion chromatography (C-IC) in accordance with the IEC 62321-3-2 standard, the content of chlorine (Cl) may be 1 ppm to 100 ppm. As another specific example, when the pyrolysis oil is analyzed by combustion-ion chromatography (C-IC) in accordance with the IEC 62321-3-2 standard, the content of chlorine (Cl) may be 1 ppm to 10 ppm.

As the polishing pad according to an embodiment has a content of chlorine adjusted to a certain range as described above, it is possible to reduce the size of debris, thereby minimizing the occurrence of defects and scratches during a CMP process.

For any aspect of the present invention, defects may be determined after polishing has been carried out (e.g. in the same manner as the polishing rate test using a CMP polishing machine as described herein). Upon completion of the polishing, a silicon wafer may be transferred to a cleaner and cleaned for 10 seconds each using 1% HF, and deionized water (DIW), 1% H₂NO₃. Thereafter, it may be transferred to a spin dryer, washed with deionized water (DIW), and then dried with nitrogen for 15 seconds. The change in defects of the dried silicon wafer before and after the polishing may be measured using a defect measurement device (e.g. manufacturer: Tenkor, model: XP+). Specifically, the total number of scratches, chatter marks, pits, and residues on the surface of the wafer may be measured.

In addition, the polishing pad according to an embodiment comprises sulfur (S) in a certain content when pyrolyzed. As a result, it is possible to adjust the size of debris while maintaining excellent overall physical properties and performance of the polishing pad, thereby reducing the occurrence of defects and scratches during a CMP process, resulting in enhanced process stability. For example, when the pyrolysis oil is analyzed using an elemental analyzer, the content of sulfur (S) may be 1 ppm to 100 ppm. Specifically, when the pyrolysis oil is analyzed using an elemental analyzer, the content of sulfur (S) may be 3 ppm to 100 ppm. More specifically, when the pyrolysis oil is analyzed using an elemental analyzer, the content of sulfur (S) may be 3 ppm to 10 ppm.

For any aspect of the present invention, for measuring the elemental analysis, an elemental analyzer (e.g. a FLASH 2000 CHNS/O analyzer, Thermo Fisher Scientific) may be used to analyze the elemental content of C, H, N, S, and O, excluding halogens (F, Cl), through combustion at 1,800°C. The generated gas may be quantitatively analyzed for the content of sulfur (S) element through a GC column.

In addition, the polishing pad according to an embodiment may comprise residual metal components in a certain content when the polishing layer is pyrolyzed. For example, when the pyrolysis oil obtained by pyrolyzing the polishing layer at 320°C for 6 hours is analyzed using an ICP-OES (inductively coupled plasma-optical emission spectrometer), the total content of metal components may be 1 ppm to 3,000 ppm. Specifically, when the pyrolysis oil is analyzed using an ICP-OES, the total content of metal components may be 1 ppm to 3,000 ppm, 1 ppm to 1,500 ppm, 1 ppm to 1,000 ppm, 1 ppm to 100 ppm, or 1 ppm to 10 ppm. More specifically, when the pyrolysis oil is analyzed using an ICP-OES, the total content of metal components may be 3 ppm to 3,000 ppm, 3 ppm to 1,500 ppm, 3 ppm to 1,000 ppm, 3 ppm to 100 ppm, or 3 ppm to 10 ppm.

For any aspect of the present invention, the content of inorganic substances may be determined by placing a sample of pyrolysis oil in ICP-OES (5110 SVDV, Agilent) and making said sample into an atomic or ion-excited state using argon plasma. In such an event, the intensity of light emitted when the electrons of atoms or ions return to the ground state or low state may be measured. Thereafter, the content of inorganic substances (Al, Si, and Fe) in the pyrolysis oil may be quantitatively analyzed based on the calibration graph.

The metal components are derived from the catalyst components used in preparing the polishing pad, and the detection of the metal components may mean that a polishing pad with excellent physical properties has been prepared. Specifically, as the content of metal components contained in the pyrolysis oil obtained by pyrolyzing the polishing layer is within the above range, the polishing pad can have high strength and hardness.

Meanwhile, the metal components are not particularly limited, but they may specifically comprise at least one selected from the group consisting of aluminum (Al), iron (Fe), cadmium (Cd), chromium (Cr), lead (Pb), and arsenic (As). In a specific embodiment, when the pyrolysis oil is analyzed using an ICP-OES, the content of aluminum (Al) may be 1 ppm to 100 ppm, 1 ppm to 50 ppm, 1 ppm to 10 ppm, or 1 ppm to 5 ppm. In another specific embodiment, when the pyrolysis oil is analyzed using an ICP-OES, the content of iron (Fe) may be 1 ppm to 100 ppm, 1 ppm to 50 ppm, 1 ppm to 10 ppm, or 1 ppm to 5 ppm. In a more specific embodiment, when the pyrolysis oil is analyzed using an ICP-OES, the content of aluminum (Al) and that of iron (Fe) may each be 1 ppm to 50 ppm.

In addition, when the pyrolysis oil is analyzed using an ICP-OES, the content of silicon (Si) may be 1 ppm to 3,000 ppm, specifically, 100 ppm to 3,000 ppm.

In addition, the pyrolysis oil according to an embodiment may contain various substances. When it is distilled, it may exhibit a boiling point in a specific range depending on the respective substances contained in the pyrolysis oil. Specifically, when the pyrolysis oil (substances contained in the pyrolysis oil) is analyzed according to the ASTM D2887 (specifically, ASTM D2887-19a) standard, the initial boiling point may be 10°C to 50°C, and the final boiling point may be 400°C to 500°C. Specifically, the initial boiling point of the pyrolysis oil may be 30°C to 40°C, and the final boiling point of the pyrolysis oil may be 430°C to 460°C.

When the pyrolysis oil is distilled to analyze its boiling point, the boiling point of the substance accounting for 5% by weight of the pyrolysis oil may be 10°C to 69°C. The boiling point of the substance accounting for 10% by weight of the pyrolysis oil may be 69°C to 73°C. The boiling point of the substance accounting for 20% by weight of the pyrolysis oil may be 73°C to 78°C. The boiling point of the substance accounting for 30% by weight of the pyrolysis oil may be 78°C to 87°C. The boiling point of the substance accounting for 40% by weight of the pyrolysis oil may be 87°C to 112°C. The boiling point of the substance accounting for 50% by weight of the pyrolysis oil may be 112°C to 137°C. The boiling point of the substance accounting for 60% by weight of the pyrolysis oil may be 137°C to 163°C. The boiling point of the substance accounting for 70% by weight of the pyrolysis oil may be 163°C to 199°C. The boiling point of the substance accounting for 80% by weight of the pyrolysis oil may be 199°C to 298°C. The boiling point of the substance accounting for 90% by weight of the pyrolysis oil may be 298°C to 358°C. The boiling point of the substance accounting for 95% by weight of the pyrolysis oil may be 358°C to 500°C.

In addition, the polishing pad according to an embodiment has excellent performance and overall physical properties.

When the silicon oxide layer of a silicon wafer is polished with a ceria slurry using the polishing pad, the polishing rate (removal rate) may be 2,000 Å/minute or more, 2,200 Å/minute or more, 2,300 Å/minute or more, or 2,400 Å/minute or more, and 3,000 Å/minute or less, 2,800 Å/minute or less, 2,600 Å/minute or less, or 2,500 Å/minute or less.

As an example, when the silicon oxide layer of a silicon wafer is polished with a ceria slurry using the polishing pad, the polishing rate according to the following equation may be 2,200 Å/minute to 2,600 Å/minute. Polishing rate (A/minute) = difference in thickness before and after polishing (Å) / polishing time (minute)

Specifically, the polishing rate may be a polishing rate for a silicon wafer having a diameter of 300 mm on which silicon oxide has been deposited (e.g. by a CVD process). In particular, the polishing rate may be a polishing rate for a silicon wafer having a diameter of 300 mm on which silicon oxide has been deposited by a CVD process and set on a porous polyurethane polishing pad mounted on a platen in a CMP polishing machine while the silicon oxide layer of the silicon wafer faced downward. In addition, the polishing rate may be measured under a polishing load of 4.0 psi while the polishing pad is rotated at a speed of 150 rpm, a calcined ceria slurry is supplied onto the polishing pad at a rate of 250 ml/minute, and the platen is rotated at a speed of 150 rpm for 60 seconds. The temperature condition when the polishing rate is measured is not particularly limited, but it may be, for example, a room temperature condition. Upon completion of the polishing, the silicon wafer may be detached from the carrier, mounted in a spin dryer, washed with deionized water (DIW), and then dried with nitrogen for 15 seconds. The film thickness of the dried silicon wafer may then be measured before and after the polishing using a spectral reflectometer-type thickness measuring instrument (manufacturer: Keyence, model: SI-F80R). Thereafter, the polishing rate may be calculated using the following Equation 1. Polishing rate (A/minute) = difference in thickness before and after polishing (Å) / polishing time (minute)

In addition, the pad cut rate of the polishing layer may be 30 µm/hr to 60 µm/hr, 30 µm/hr to 50 µm/hr, 40 µm/hr to 60 µm/hr, or 40 µm/hr to 50 µm/hr.

The thickness of the polishing pad may be 0.8 mm to 5.0 mm, 1.0 mm to 4.0 mm, 1.0 mm to 3.0 mm, 1.5 mm to 2.5 mm, 1.7 mm to 2.3 mm, or 2.0 mm to 2.1 mm. Within the above range, the basic physical properties of a polishing pad can be sufficiently exhibited while the particle size variation between the upper and lower portions is minimized.

### Polishing layer

The polishing layer provides a polishing surface that is in contact with a semiconductor substrate in a CMP process and constitutes a top pad in the polishing pad.

According to an embodiment, the polishing layer comprises a polyurethane resin.

The polishing layer comprises a urethane-based prepolymer, a foaming agent, and a curing agent. Specifically, the polyurethane resin may be formed from a composition that comprises a urethane-based prepolymer, a foaming agent, and a curing agent.

More specifically, the polishing layer comprises a polyurethane-based resin, which is a reaction product of a urethane-based prepolymer, a foaming agent, and a curing agent, i.e., a cured product of a composition in which the components are mixed. As a result, it comprises a porous polyurethane-based resin. In addition, the polishing layer may comprise a plurality of pores formed from the foaming agent.

The polishing layer may have a thickness of, for example, 0.8 mm or more, 1 mm or more, 1.2 mm or more, or 1.5 mm or more, and 5 mm or less, 3 mm or less, 2.5 mm or less, or 2 mm or less. As a specific example, the thickness of the polishing layer may be 0.8 mm to 5 mm or 1.5 mm to 3 mm.

The polishing layer may have a specific gravity of, for example, 0.6 g/cm³ or more, 0.7 g/cm³ or more, or 0.75 g/cm³ or more, and 0.9 g/cm³ or less, 0.85 g/cm³ or less, or 0.8 g/cm³ or less. As a specific example, the specific gravity of the polishing layer may be 0.6 g/cm³ to 0.9 g/cm³ or 0.7 g/cm³ to 0.9 g/cm³.

Specific gravity may be measured using a gravimeter. Specifically, specific gravity may be determined by cutting the sample to 2 cm × 5 cm (thickness: 2 mm) and storing it at a temperature of 25°C for 12 hours to measure the specific gravity using a gravimeter.

The polishing layer may have a hardness of, for example, 30 Shore D or more, 40 Shore D or more, or 50 Shore D or more, and 80 Shore D or less, 70 Shore D or less, 65 Shore D or less, or 60 Shore D or less. As a specific example, the hardness of the polishing layer may be 30 Shore D to 80 Shore D or 50 Shore D to 65 Shore D.

Hardness may be measured using a hardness tester. Specifically, hardness may be determined by cutting the sample to 5 cm × 5 cm (thickness: 2 mm) and storing it at room temperature and a temperature of 30°C, 50°C, and 70°C, respectively, for 12 hours to measure the Shore D hardness and Asker C hardness using a hardness tester. The polishing layer may have a tensile strength of, for example, 5 N/mm² or more, 10 N/mm² or more, or 15 N/mm² or more, and 30 N/mm² or less, 25 N/mm² or less, or 20 N/mm² or less. As a specific example, the tensile strength of the polishing layer may be 5 N/mm² to 30 N/mm² or 15 N/mm² to 25 N/mm².

Tensile strength may be measured using a universal testing machine (UTM). Specifically, tensile strength may be determined by cutting the sample to 4 cm × 1 cm (thickness: 2 mm). The ultimate strength immediately before the fracture may then be measured while the sample is tested at a rate of 50 mm/minute using a universal testing machine (UTM).

The polishing layer may have an elongation of, for example, 50% or more, 70% or more, 90% or more, 106% or more, or 120% or more, and 300% or less, 250% or less, 200% or less, or 150% or less. As a specific example, the elongation of the polishing layer may be 50% to 300% or 90% to 130%. The elongation may be an elongation at break.

Elongation may be measured using a universal testing machine (UTM). Specifically, elongation may be determined by cutting the sample to 4 cm × 1 cm (thickness: 2 mm). The maximum deformation immediately before the fracture may be measured while the sample is tested at a rate of 50 mm/min using a universal testing machine (UTM). The ratio of the maximum deformation to the initial length is typically expressed in percent (%).

As a specific example, the polishing layer may have a hardness of 50 Shore D to 65 Shore D, a tensile strength of 15 N/mm² to 25 N/mm², and an elongation of 90% to 130%.

The pores are present as dispersed in the polishing layer.

The average diameter of the pores may be, for example, 10 µm to 60 µm, 10 µm to 50 µm, 20 µm to 50 µm, 20 µm to 40 µm, 10 µm to 30 µm, 20 µm to 25 µm, or 30 µm to 50 µm.

In addition, the total area of the pores may be 30% to 60%, 35% to 50%, or 35% to 43%, based on the total area of the polishing layer. In addition, the total volume of the pores may be 30 to 70%, or 40 to 60%, based on the total volume of the polishing layer.

The polishing layer may have grooves on its surface for mechanical polishing. The grooves may have a depth, a width, and a spacing as desired for mechanical polishing, which is not particularly limited.

The polishing pad according to an embodiment has a chlorine content adjusted to a certain range, whereby it is possible to reduce the size of debris while maintaining the excellent physical properties and performance of the polishing pad, thereby minimizing the occurrence of defects and scratches during a CMP process. For example, when the polishing layer is analyzed by combustion-ion chromatography (C-IC) in accordance with the IEC 62321-3-2 standard, the content of chlorine (Cl) may be less than 10,000 ppm. Specifically, the content of chlorine in the polishing layer may be 5,000 ppm or less, 1,000 ppm or less, 500 ppm or less, 200 ppm or less, 100 ppm or less, 80 ppm or less, or 50 ppm or less.In addition, the lower limit of the content range of chlorine in the polishing layer according to an embodiment may be, for example, 0 ppm or more, greater than 0 ppm, 1 ppm or more, 5 ppm or more, 10 ppm or more, 20 ppm or more, 50 ppm or more, or 100 ppm or more. Within the above preferred range, the surface area and adsorption force can be adjusted as the debris agglomerates into an appropriate size to facilitate adsorption and desorption in the wafer and pad, and the electrical attraction and repulsion force can be adjusted to make the polishing performance more appropriate.

As a specific example, when the polishing layer is analyzed by combustion-ion chromatography (C-IC) in accordance with the IEC 62321-3-2 standard, the content of chlorine (Cl) may be 10 ppm to 1,000 ppm. As another specific example, when the polishing layer is analyzed by combustion-ion chromatography (C-IC) in accordance with the IEC 62321-3-2 standard, the content of chlorine (Cl) may be 10 ppm to 100 ppm, 20 ppm to 80 ppm, or 20 ppm to 50 ppm. As another specific example, when the polishing layer is analyzed by combustion-ion chromatography (C-IC) in accordance with the IEC 62321-3-2 standard, the content of chlorine (Cl) may be 50 ppm to 10,000 ppm or 100 ppm to 10,000 ppm.

The chlorine content may be obtained by measuring the content of chlorine in a sample by IEC 62321-3-2, which is an international standard for measuring the content of a specific substance by combustion-ion chromatography (C-IC). In such an event, the sample to be measured for the chlorine content may be a circular sample taken in a size of 3 cm in diameter and 0.3 cm in height from the polishing layer of the polishing pad.

### Urethane-based prepolymer

The polishing layer of the polishing pad according to an embodiment comprises a urethane-based prepolymer.

A prepolymer generally refers to a polymer having a relatively low molecular weight wherein the degree of polymerization is adjusted to an intermediate level so as to conveniently mold a molded article in the process of producing a cured product. A prepolymer may be molded to a final cured product by itself or after a reaction with another polymerizable compound.

In an embodiment, the urethane-based prepolymer may be prepared by reacting an isocyanate compound with a polyol.

The isocyanate compound used in the preparation of the urethane-based prepolymer may be one selected from the group consisting of an aromatic diisocyanate, an aliphatic diisocyanate, an alicyclic diisocyanate, or combinations thereof.

The isocyanate compound may comprise, for example, one selected from the group consisting of toluene 2,4-diisocyanate (2,4-TDI), toluene 2,6-diisocyanate (2,6-TDI), naphthalene 1,5-diisocyanate, para-phenylene diisocyanate, tolidine diisocyanate, 4,4'-diphenylmethane diisocyanate, hexamethylene diisocyanate, dicyclohexylmethane diisocyanate, isophorone diisocyanate, and combinations thereof.

The polyol is a compound comprising at least two or more hydroxyl groups (-OH) per molecule. For example, it may comprise one selected from the group consisting of a polyether polyol, a polyester polyol, a polycarbonate polyol, a polycaprolactone polyol, and combinations thereof.

The polyol may comprise, for example, one selected from the group consisting of polytetramethylene ether glycol, polypropylene ether glycol, ethylene glycol, 1,2-propylene glycol, 1,3-propylene glycol, 1,2-butanediol, 1,3-butanediol, 2-methyl-1,3-propanediol, 1,4-butanediol, neopentyl glycol, 1,5-pentanediol, 3-methyl-1,5-pentanediol, 1,6-hexanediol, diethylene glycol, dipropylene glycol, tripropylene glycol, and combinations thereof.

The polyol may have a weight average molecular weight (Mw) of 100 to 3,000. The polyol may have a weight average molecular weight (Mw) of, for example, 100 to 3,000, for example, 100 to 2,000, for example, 100 to 1,800.

In an embodiment, the polyol may comprise a low molecular weight polyol having a weight average molecular weight (Mw) of 100 to 300 and a high molecular weight polyol having a weight average molecular weight (Mw) of 300 to 1,800.

The urethane-based prepolymer may have a weight average molecular weight (Mw) of 500 to 3,000. The urethane-based prepolymer may have a weight average molecular weight (Mw) of, for example, 1,000 to 2,000 or, for example, 1,000 to 1,500.

In an embodiment, the isocyanate compound for the preparation of the urethane-based prepolymer may comprise an aromatic diisocyanate compound, and the aromatic diisocyanate compound, for example, may comprise 2,4-toluene diisocyanate (2,4-TDI) and 2,6-toluene diisocyanate (2,6-TDI). The polyol compound for the preparation of the urethane-based prepolymer may comprise polytetramethylene ether glycol (PTMEG) and diethylene glycol (DEG).

In another embodiment, the isocyanate compound for the preparation of the urethane-based prepolymer may comprise an aromatic diisocyanate compound and a cycloaliphatic diisocyanate compound. For example, the aromatic diisocyanate compound comprises 2,4-toluene diisocyanate (2,4-TDI) and 2,6-toluene diisocyanate (2,6-TDI), and the cycloaliphatic diisocyanate compound comprises dicyclohexylmethane diisocyanate (H12MDI). The polyol compound for the preparation of the urethane-based prepolymer may comprise polytetramethylene ether glycol (PTMEG) and diethylene glycol (DEG).

The urethane-based prepolymer may have an isocyanate end group content (NCO%) of 5% by weight or more, 7.5% by weight or more, or 10% by weight or more, and 13% by weight or less, 12% by weight or less, or 11% by weight or less. As a specific example, the urethane-based prepolymer may have an isocyanate end group content (NCO%) of 7.5% by weight to 12% by weight. As a more specific example, the urethane-based prepolymer may have an isocyanate end group content (NCO%) of 11% by weight to 12% by weight.

The isocyanate end group content (NCO%) of the urethane-based prepolymer may be designed by comprehensively adjusting the type and content of the isocyanate compound and the polyol compound for the preparation of the urethane-based prepolymer, the process conditions such as temperature, pressure, and time in the process for preparing the urethane-based prepolymer, and the type and content of the additives used in the preparation of the urethane-based prepolymer.

If the isocyanate end group content (NCO%) of the urethane-based prepolymer satisfies the above range, the reaction rate, reaction time, and final curing structure in the subsequent reaction between the urethane-based prepolymer and a curing agent can be adjusted in a way favorable to the polishing performance from the viewpoint of the use and purpose of a final polishing pad.

In an embodiment, the urethane-based prepolymer may have an isocyanate end group content (NCO%) of 8% by weight to 10% by weight, for example, 8% by weight to 9.4% by weight. If the NCO% of the urethane-based prepolymer is less than the above range, the electrical properties based on the chemically hardened structure in the polishing pad may be achieved such that the desired polishing performance in terms of polishing rate and flatness are not achieved, and there may be a problem in that the lifespan of the polishing pad is reduced due to an excessive increase in the pad cut rate. On the other hand, if the NCO% exceeds the above range, surface defects such as scratches and chatter marks on a semiconductor substrate may increase.

### Foaming agent

The foaming agent is a component for forming a pore structure in the polishing layer. It may comprise one selected from the group consisting of a solid phase foaming agent, a gas phase foaming agent, a liquid phase foaming agent, and combinations thereof.

According to an embodiment, the foaming agent may be a non-chlorine-based foaming agent that does not contain a chlorine component. In particular, it may not contain, or minimize, the use of a chlorine-based foaming agent component commonly used in the preparation of polishing pads, such as vinylidene chloride (VDC). For example, the content of the non-chlorine-based foaming agent may be 50% by weight or more, 80% by weight or more, 90% by weight or more, 95% by weight or more, 97% by weight or more, 99% by weight or more, or 99.5% by weight or more, and 100% by weight or less or 99.5% by weight or less, as a specific example, 80% by weight to 100% by weight, 90% by weight to 100% by weight, or 80% by weight to 99.5% by weight, based on the total weight of the foaming agent. In addition, the content of the chlorine-based foaming agent may be 20% by weight or less, 10% by weight or less, 5% by weight or less, 1% by weight or less, 0.5% by weight or less, or 0.3% by weight or less, and 0% by weight or more, 0.1% by weight or more, 0.5% by weight or more, as a specific example, 0% by weight to 20% by weight, 0% by weight to 1% by weight, 0% by weight to 0.5% by weight, or 0.5% by weight to 20% by weight, based on the total weight of the foaming agent.

The foaming agent may be at least one selected from a solid phase foaming agent comprising particles having a hollow structure, a liquid phase foaming agent using a volatile liquid, and an inert gas.

As an example, the solid phase foaming agent may comprise particles having a hollow structure that have been expanded by heat and adjusted in size. Such a solid phase foaming agent has the advantage of controlling the size of pores to be uniform as it is employed in the raw material in an already expanded form and has a uniform particle size.

In addition, the solid phase foaming agent may comprise expandable particles. The expandable particles are particles having a characteristic that can be expanded by heat or pressure. Their size in the final polishing layer may be determined by heat or pressure applied in the process of preparing the polishing layer. The expandable particles are employed in the raw material in a particle state that has not been already expanded. Their final size is determined when expanded by heat or pressure applied during the process of preparing the polishing layer.

The solid phase foaming agent may have an average particle size of 5 µm to 100 µm, specifically, 5 µm to 50 µm or 20 µm to 50 µm. The average particle size of the solid phase foaming agent may refer to the average particle size of expanded particles themselves when the solid phase foaming agent is particles employed in the raw material in an expanded state as described below. It may refer to the average particle diameter of particles after they are expanded by heat or pressure in the preparation process when the solid phase foaming agent is particles employed in the raw material in an unexpanded state as described below.

The solid phase foaming agent in the form of expandable particles may comprise a shell of a resin; and an expansion-inducing component encapsulated inside the shell. These expandable particles may be formed into a hollow structure by the vaporization of the encapsulated expansion-inducing component by heat during the preparation process.

For example, the shell may comprise a thermoplastic resin. The thermoplastic resin may be at least one selected from the group consisting of an acrylonitrile-based copolymer, a methacrylonitrile-based copolymer, and an acrylic copolymer.

The thickness of the shell may be, for example, 0.1 µm or more, 0.5 µm or more, 1 µm or more, 2 µm or more, or 3 µm or more, and 15 µm or less, 12 µm or less, or 10 µm or less, as a specific example, 2 µm to 15 µm.

The expansion-inducing component may comprise one selected from the group consisting of a hydrocarbon compound, a tetraalkylsilane compound, and combinations thereof. Specifically, the hydrocarbon may comprise one selected from the group consisting of ethane, ethylene, propane, propene, n-butane, isobutane, n-butene, isobutene, n-pentane, isopentane, neopentane, n-hexane, heptane, petroleum ether, and combinations thereof. The tetraalkylsilane compound may comprise one selected from the group consisting of tetramethylsilane, trimethylethylsilane, trimethylisopropylsilane, trimethyl-n-propylsilane, and combinations thereof.

The solid phase foaming agent may comprise particles treated with an inorganic component. In an embodiment, the solid phase foaming agent may be one treated with silica (SiO₂) particles. The treatment of the solid phase foaming agent with an inorganic component can prevent aggregation between a plurality of particles. The solid phase foaming agent treated with an inorganic component may be different from the solid phase foaming agent that is not treated with an inorganic component in terms of the chemical, electrical, and/or physical properties of the surface of the foaming agent.

The commercial products of the solid phase foaming agent include Nouryon's 920DE20d70, 051DET40d25, and 051DET40d42 and Matsumoto's F-65DE, F-80DE, and FN-80SDE.

As a specific example, the foaming agent used in the polishing pad according to an embodiment comprises a solid phase foaming agent. The solid phase foaming agent may comprise at least one selected from the group consisting of an acrylonitrile-based copolymer, a methylmethacrylate-based copolymer, a methacrylonitrile-based copolymer, and an acrylic-based copolymer.

The content of the solid phase foaming agent may be 0.1 part by weight or more, 0.5 part by weight or more, or 1 part by weight or more, and 5 parts by weight or less, 3 parts by weight or less, or 2 parts by weight or less, relative to 100 parts by weight of the urethane-based prepolymer. As a specific example, the content of the solid phase foaming agent may be 0.1 part by weight to 5 parts by weight or 0.5 part by weight to 2 parts by weight, relative to 100 parts by weight of the urethane-based prepolymer.

The type and content of the solid phase foaming agent may be designed according to the desired pore structure and physical properties of the polishing layer.

Meanwhile, the liquid phase foaming agent may be introduced during the mixing and reaction of the prepolymer and the curing agent to form pores. It does not participate in the reaction between the prepolymer and the curing agent. In addition, the liquid phase foaming agent is physically vaporized by heat generated during the mixing and reaction of the prepolymer and the curing agent to form pores.

The volatile liquid phase foaming agent may be liquid at 25°C while it does not react with an isocyanate group, an amide group, and an alcohol group. Specifically, the volatile liquid phase foaming agent may be selected from the group consisting of cyclopentane, n-pentane, cyclohexane, n-butyl acetate, bis(nonafluorobutyl)(trifluoromethyl)amine; and perfluoro compounds such as perfluorotributylamine, perfluoro-N-methylmorpholine, perfluorotripentylamine, and perfluorohexane. Commercially available products of the perfluoro compound include FC-40 (3M), FC-43 (3M), FC-70 (3M), FC-72 (3M), FC-770 (3M), FC-3283 (3M), and FC-3284 (3M).

In addition, the foaming agent may comprise a gas phase foaming agent. For example, the foaming agent may comprise a solid phase foaming agent and a gas phase foaming agent.

The gas phase foaming agent may comprise an inert gas. The gas phase foaming agent is fed while the urethane-based prepolymer and the curing agent are reacted in order to be used as a component to form pores.

The kind of the inert gas is not particularly limited as long as it is a gas that does not participate in the reaction between the urethane-based prepolymer and the curing agent. For example, the inert gas may comprise one selected from the group consisting of nitrogen gas (N₂), carbon dioxide gas (CO₂), argon gas (Ar), helium gas (He), and combinations thereof.

The type and content of the gas phase foaming agent may be designed according to the desired pore structure and physical properties of the polishing layer.

The inert gas may be fed in a volume of 10% to 30% based on the total volume of the composition. Specifically, the inert gas may be fed in a volume of 15% to 30% based on the total volume of the composition. Specifically, the gas phase foaming agent may be fed through a predetermined feeding line while the urethane-based prepolymer, the solid phase foaming agent, and the curing agent are mixed. The feeding rate of the gas phase foaming agent is about 0.8 L/minute to about 2.0 L/ minute, for example, about 0.8 L/ minute to about 1.8 L/ minute, for example, about 0.8 L/ minute to about 1.7 L/ minute, for example, about 1.0 L/ minute to about 2.0 L/ minute, for example, about 1.0 L/ minute to about 1.8 L/ minute, for example, about 1.0 L/ minute to about 1.7 L/ minute.

### Curing agent

The curing agent is a compound for chemically reacting with the urethane-based prepolymer to form a final cured structure in the polishing layer. For example, it may comprise an amine compound or an alcohol compound. Specifically, the curing agent may comprise one selected from the group consisting of an aromatic amine, an aliphatic amine, an aromatic alcohol, an aliphatic alcohol, and combinations thereof.

According to an embodiment, the curing agent may comprise a non-chlorine-based curing agent that does not contain a chlorine component. For example, the content of the non-chlorine-based curing agent may be 50% by weight or more, 80% by weight or more, 90% by weight or more, 95% by weight or more, 97% by weight or more, 99% by weight or more, or 99.5% by weight or more, and 100% by weight or less or 99.5% by weight or less, as a specific example, 80% by weight to 100% by weight, 90% by weight to 100% by weight, or 80% by weight to 99.5% by weight, based on the total weight of the curing agent. In addition, the content of the chlorine-based curing agent may be 20% by weight or less, 10% by weight or less, 5% by weight or less, 1% by weight or less, 0.5% by weight or less, or 0.3% by weight or less, and 0% by weight or more, 0.1% by weight or more, 0.5% by weight or more, as a specific example, 0% by weight to 20% by weight, 0% by weight to 1% by weight, 0% by weight to 0.5% by weight, or 0.5% by weight to 20% by weight, based on the total weight of the curing agent.

The curing agent may be at least one selected from a solid phase curing agent and a liquid phase curing agent.

The solid phase curing agent may contain an active hydrogen group. The solid phase curing agent may contain an amine group (-NH₂) as an active hydrogen group.

In addition, the solid phase curing agent may be an ester compound containing two or more benzene rings. Specifically, the solid phase curing agent may comprise two or more of the ester groups in the molecule.

The solid phase curing agent may have a weight average molecular weight of 150 to 400, for example, 150 to 350, for example, 200 to 350, for example, 250 to 350, for example, 300 to 350. The solid phase curing agent may have a melting point (m.p.) of 100°C to 150°C, for example, 100°C to 140°C, for example, 110°C to 130°C.

In an embodiment, the solid phase curing agent comprises at least one selected from the group consisting of 1,3-propanediol bis(4-aminobenzoate) (PDPAB), 4-(4-aminobenzoyl)oxyphenyl 4-aminobenzoate, 4-(4-aminobenzoyl)oxybutyl 4-aminobenzoate, 4-[4-(4-aminobenzoyl)oxy-3-methylbutoxy]butyl 4-aminobenzoate, and methylene bis-methylanthranilate (MBNA).

The liquid phase curing agent may contain an active hydrogen group. The liquid phase curing agent may contain at least one selected from the group consisting of an amine group (-NH₂), a hydroxyl group (-OH), a carboxylic acid group (-COOH), an epoxy group, and combinations thereof as an active hydrogen group. Specifically, it may contain an amine group (-NH₂).

In addition, the liquid phase curing agent may contain sulfur in the molecule. Specifically, it may contain two or more sulfur elements in the molecule.

The liquid phase curing agent may have a weight average molecular weight of 50 to 300, for example, 100 to 250, for example, 150 to 250, for example, 200 to 250.

In addition, the liquid phase curing agent may be liquid at room temperature. Alternatively, the liquid phase curing agent may have a boiling point (b.p.) of 160°C to 240°C, specifically 170°C to 240°C, more specifically 170°C to 220°C.

Examples of the liquid phase curing agent include at least one selected from the group consisting of 3,5-dimethylthio-2,6-diaminotoluene (DMTDA), 2,6-bis(methylthio)-4-methyl-1,3-benzenediamine, and N,N'-bis(sec-butylamino)diphenylmethane.

In addition, the curing agents may further comprise other curing agents in addition to the liquid phase curing agent and the solid phase curing agent. The additional curing agent may be, for example, at least one of an amine compound and an alcohol compound. Specifically, the additional curing agent may comprise at least one compound selected from the group consisting of an aromatic amine, an aliphatic amine, an aromatic alcohol, and an aliphatic alcohol.

For example, the additional curing agent may be at least one selected from the group consisting of diaminodiphenylmethane, diaminodiphenyl sulphone, m-xylylene diamine, isophoronediamine, ethylenediamine, diethylenetriamine, triethylenetetramine, polypropylenediamine, polypropylenetriamine, ethylene glycol, diethylene glycol, dipropylene glycol, butanediol, hexanediol, glycerin, and trimethylolpropane.

As a specific example, the curing agent may comprise at least one selected from the group consisting of diethyltoluenediamine (DETDA), 3,5-dimethylthio-2,6-diaminotoluene (DMTDA), 1,3-propanediol bis(4-aminobenzoate) (PDPAB), N,N'-bis(sec-butylamino)diphenylmethane, 2,6-bis(methylthio)-4-methyl-1,3-benzenediamine, 4-(4-aminobenzoyl)oxyphenyl 4-aminobenzoate, 4-(4-aminobenzoyl)oxybutyl 4-aminobenzoate, 4-[4-(4-aminobenzoyl)oxy-3-methylbutoxy]butyl 4-aminobenzoate, and methylene bis-methylanthranilate (MBNA).

The content of the curing agent may be 5 parts by weight or more, 10 parts by weight or more, 15 parts by weight or more, or 20 parts by weight or more, and 50 parts by weight or less, 45 parts by weight or less, 40 parts by weight or less, 35 parts by weight or less, 30 parts by weight or less, or 25 parts by weight or less, relative to 100 parts by weight of the urethane-based prepolymer. The content of the curing agent may be 10 parts by weight to 40 parts by weight, more specifically, 15 parts by weight to 35 parts by weight or 15 parts by weight to 25 parts by weight, relative to 100 parts by weight of the urethane-based prepolymer.

### Additives

The composition for preparing a polishing layer may further comprise other additives such as a surfactant and a reaction rate controlling agent. The names such as "surfactant" and "reaction rate controlling agent" are arbitrary names based on the main role of the substances. The respective substances do not necessarily perform only a function limited to the role defined by the names.

The surfactant is not particularly limited as long as it acts to prevent pores from coalescing and overlapping with each other. For example, the surfactant may comprise a silicone-based surfactant.

The surfactant may be employed in an amount of 0.2 part by weight to 2 parts by weight relative to 100 parts by weight of the urethane-based prepolymer. Specifically, the surfactant may be employed in an amount of 0.2 part by weight to 1.9 parts by weight, for example, 0.2 part by weight to 1.8 parts by weight, for example, 0.2 part by weight to 1.7 parts by weight, for example, 0.2 part by weight to 1.6 parts by weight, for example, 0.2 part by weight to 1.5 parts, for example, 0.5 part by weight to 1.5 parts by weight, relative to 100 parts by weight of the urethane-based prepolymer. If the amount of the surfactant is within the above range, pores derived from the gas phase foaming agent can be stably formed and maintained in the mold.

The reaction rate controlling agent serves to promote or retard the reaction. A reaction promoter, a reaction retarder, or both may be used depending on the purpose. The reaction rate controlling agent may comprise a reaction promoter. For example, the reaction rate controlling agent may be at least one reaction promoter selected from the group consisting of a tertiary amine-based compound and an organometallic compound.

Specifically, the reaction rate controlling agent may comprise at least one selected from the group consisting of triethylenediamine, dimethylethanolamine, tetramethylbutanediamine, 2-methyl-triethylenediamine, dimethylcyclohexylamine, triethylamine, triisopropanolamine, 1,4-diazabicyclo(2,2,2)octane, bis(2-methylaminoethyl) ether, trimethylaminoethylethanolamine, N,N,N,N,N"-pentamethyldiethylenetriamine, dimethylaminoethylamine, dimethylaminopropylamine, benzyldimethylamine, N-ethylmorpholine, N,N-dimethylaminoethylmorpholine, N,N-dimethylcyclohexylamine, 2-methyl-2-azanorbornane, dibutyltin dilaurate, stannous octoate, dibutyltin diacetate, dioctyltin diacetate, dibutyltin maleate, dibutyltin di-2-ethylhexanoate, and dibutyltin dimercaptide. Specifically, the reaction rate controlling agent may comprise at least one selected from the group consisting of benzyldimethylamine, N,N-dimethylcyclohexylamine, and triethylamine.

The reaction rate controlling agent may be employed in an amount of 0.05 part by weight to 2 parts by weight relative to 100 parts by weight of the urethane-based prepolymer. Specifically, the reaction rate controlling agent may be employed in an amount of 0.05 part by weight to 1.8 parts by weight, for example, 0.05 part by weight to 1.7 parts by weight, for example, 0.05 part by weight to 1.6 parts by weight, for example, 0.1 part by weight to 1.5 parts by weight, for example, 0.1 part by weight to 0.3 part by weight, for example, 0.2 part by weight to 1.8 parts by weight, for example, 0.2 part by weight to 1.7 parts by weight, for example, 0.2 part by weight to 1.6 parts by weight, for example, 0.2 part by weight to 1.5 parts by weight, for example, 0.5 part by weight to 1 part by weight, relative to 100 parts by weight of the urethane-based prepolymer. If the reaction rate controlling agent is used in the above content range, the curing reaction rate of the prepolymer composition may be appropriately controlled to form a polishing layer having pores of a desired size and hardness.

### Additional constituent layers

The support layer constitutes a sub pad and serves to support the polishing layer and to absorb and disperse an impact applied to the polishing layer. Thus, it minimizes damage and defects to the object to be polished during the polishing process using the polishing pad.

The support layer may comprise a nonwoven fabric or a suede, but it is not limited thereto.

In an embodiment, the support layer may be a resin-impregnated nonwoven fabric. The nonwoven fabric may be a fibrous nonwoven fabric comprising one selected from the group consisting of a polyester fiber, a polyamide fiber, a polypropylene fiber, a polyethylene fiber, and combinations thereof.

The resin impregnated in the nonwoven fabric may comprise a polyurethane resin, a polybutadiene resin, a styrene-butadiene copolymer resin, a styrene-butadiene-styrene copolymer resin, an acrylonitrile-butadiene copolymer resin, a styrene-ethylene-butadiene-styrene copolymer resin, a silicone rubber resin, a polyester-based elastomer resin, a polyamide-based elastomer resin, and combinations thereof.

The support layer may have a thickness of, for example, 0.3 mm or more or 0.5 mm or more, and 3 mm or less, 2 mm or less, or 1 mm or less. As a specific example, the thickness of the support layer may be 0.3 mm to 3 mm or 0.5 mm to 1 mm.

The support layer may have a hardness of, for example, 50 Asker C or more, 60 Asker C or more, or 70 Asker C or more, and 100 Asker C or less, 90 Asker C or less, or 80 Asker C or less. As a specific example, the hardness of the support layer may be 50 Asker C to 100 Asker C or 60 Asker C to 90 Asker C. Hardness may be measured in line with any method described herein.

In addition, an adhesive layer may be interposed between the polishing layer (top pad) and the support layer (sub pad).

The adhesive layer may comprise a hot melt adhesive. The hot melt adhesive may be at least one selected from the group consisting of a polyurethane resin, a polyester resin, an ethylene-vinyl acetate resin, a polyamide resin, and a polyolefin resin. Specifically, the hot melt adhesive may be at least one selected from the group consisting of a polyurethane resin and a polyester resin.

In addition, a double-sided adhesive tape may be laminated under the support layer. When it is applied to CMP equipment, it is attached to the platen for use once the release paper of the double-sided adhesive tape has been removed.

### Process for preparing a polishing pad

The process for preparing a polishing pad according to an embodiment comprises preparing a composition for a polishing layer comprising a urethane-based prepolymer, a foaming agent, and a curing agent; injecting the composition for a polishing layer into a mold and curing it to prepare a polishing layer; and laminating the polishing layer with a support layer. The polishing pad and polishing layer may be a polishing pad or polishing layer as defined above, below or in the claims.

The specific types and contents of the urethane-based prepolymer, curing agent, and foaming agent are as exemplified above.

The composition for a polishing layer may be prepared by sequentially or simultaneously mixing a urethane-based prepolymer, a foaming agent, and a curing agent.

As an example, the step of preparing the composition for a polishing layer may be carried out by mixing a urethane-based prepolymer with a curing agent, followed by further mixing with a foaming agent, or by mixing the urethane-based prepolymer with the foaming agent, followed by further mixing with the curing agent.

As another example, a urethane-based prepolymer, a curing agent, and a foaming agent may be put into the mixing process substantially at the same time. If a foaming agent, a surfactant, and an inert gas are further added, they may be put into the mixing process substantially at the same time.

As another example, a urethane-based prepolymer, a foaming agent, and a surfactant may be mixed in advance, and a curing agent, or a curing agent with an inert gas, may be subsequently added.

The mixing initiates the reaction of the urethane-based prepolymer and the curing agent and uniformly disperses the foaming agent and the inert gas in the raw materials. In such an event, a reaction rate controlling agent may intervene in the reaction between the urethane-based prepolymer and the curing agent from the beginning of the reaction, to thereby control the reaction rate. Specifically, the mixing may be carried out at a speed of 1,000 to 10,000 rpm or 4,000 to 7,000 rpm. Within the above speed range, it may be more advantageous for the inert gas and the foaming agent to be uniformly dispersed in the raw materials.

In addition, the step of preparing the composition for a polishing layer may be carried out under the condition of 50°C to 150°C. If necessary, it may be carried out under vacuum defoaming conditions.

If the foaming agent comprises a solid phase foaming agent, the step of preparing the composition for a polishing layer may comprise mixing the urethane-based prepolymer and the solid phase foaming agent to prepare a first preliminary composition; and mixing the first preliminary composition and the curing agent to prepare a second preliminary composition.

The first preliminary composition may have a viscosity of about 1,000 cps to about 2,000 cps, for example, about 1,000 cps to about 1,800 cps, for example, about 1,000 cps to about 1,600 cps, for example, about 1,000 cps to about 1,500 cps at about 80°C.

If the foaming agent comprises a gas phase foaming agent, the step of preparing the composition for a polishing layer may comprise preparing a third preliminary composition comprising the urethane-based prepolymer and the curing agent; and feeding the gas phase foaming agent to the third preliminary composition to prepare a fourth preliminary composition. In an embodiment, the third preliminary composition may further comprise a solid phase foaming agent.

In an embodiment, the step of preparing a polishing layer comprises preparing a mold preheated to a first temperature; and injecting the composition for a polishing layer into the preheated mold and curing it; and post-curing the cured composition for a polishing layer under a second temperature condition higher than the preheating temperature.

In an embodiment, the temperature difference between the first temperature and the second temperature may be about 10°C to about 40°C, for example, about 10°C to about 35°C, for example, about 15°C to about 35°C. In an embodiment, the first temperature may be about 60°C to about 100°C, for example, about 65°C to about 95°C, for example, about 70°C to about 90°C. In an embodiment, the second temperature may be about 100°C to about 130°C, for example, about 100°C to about 125°C, for example, about 100°C to about 120°C.

The step of curing the composition for a polishing layer at the first temperature may be carried out for about 5 minutes to about 60 minutes, for example, about 5 minutes to about 40 minutes, for example, about 5 minutes to about 30 minutes, for example, about 5 minutes to about 25 minutes.

The step of post-curing the composition for a polishing layer cured at the first temperature at the second temperature may be carried out for about 5 hours to about 30 hours, for example, about 5 hours to about 25 hours, for example, about 10 hours to about 30 hours, for example, about 10 hours to about 25 hours, for example, about 12 hours to about 24 hours, for example, about 15 hours to about 24 hours.

Thereafter, the step of injecting the composition for a polishing layer into a mold and curing it may be carried out under the temperature condition of 60°C to 120°C and the pressure condition of 50 kg/m² to 200 kg/m².

In addition, the above preparation process may further comprise the steps of cutting the surface of a polishing layer thus obtained, machining grooves on the surface thereof, bonding it with a lower part, inspection, packaging, and the like. These steps may be carried out in a conventional manner for preparing a polishing pad.

As an example, the process for preparing a polishing pad may further comprise machining at least one side of the polishing layer. The step of machining at least one side of the polishing layer may comprise forming grooves on at least one side of the polishing layer; lathe turning at least one side of the polishing layer; and roughening at least one side of the polishing layer.

The grooves may comprise at least one of concentric circular grooves spaced apart from the center of the polishing layer at a certain interval; and radial grooves continuously connected from the center of the polishing layer to the edge of the polishing layer. The lathe turning may be carried out by cutting the polishing layer to a certain thickness using a cutting tool. The roughening may be carried out by machining the surface of the polishing layer with a sanding roller.

### Pyrolysis oil

In addition, there is provided pyrolysis oil obtained from the polishing layer of the polishing pad as described in any aspect herein (e.g. above, below, or in the claims).

According to an embodiment, the pyrolysis oil is obtained from the polishing layer of the polishing pad described above, below, or in the claims.

For chlorine content analysis, the polishing layer of each polishing pad may be separated and charged into a chamber, and the polishing layer may be pyrolyzed at a temperature of 320°C for 6 hours. The vaporized stream formed by the pyrolysis may be passed through a heat exchanger to obtain liquid pyrolysis oil. Thereafter, when the liquid pyrolysis oil stream disappears, the production of pyrolysis oil may be completed through a cooling process. The pyrolysis oil thus prepared may be charged into a sample container. The content of chlorine in the pyrolysis oil is typically measured by IEC 62321-3-2, which is an international standard for measuring the content of a specific substance by combustion-ion chromatography (C-IC).

When the pyrolysis oil is analyzed by combustion-ion chromatography (C-IC) in accordance with the IEC 62321-3-2 standard, the content of chlorine may be less than 10,000 ppm, for example, 5,000 ppm or less, 1,000 ppm or less, 500 ppm or less, 200 ppm or less, 100 ppm or less, 80 ppm or less, or 50 ppm or less. When the content of residual chlorine components contained in the pyrolysis oil obtained by pyrolyzing the polishing layer of the polishing pad is within the above preferred range, it is possible to effectively reduce the environmental problems caused by the chlorine components.

In addition, the lower limit of the content range of chlorine in the pyrolysis oil obtained from the polishing layer of the polishing pad according to an embodiment may be, for example, 0 ppm or more, greater than 0 ppm, 1 ppm or more, 2 ppm or more, 3 ppm or more, 4 ppm or more, or 5 ppm or more. As the content of residual chlorine components contained in the pyrolysis oil is within the above range, the pyrolysis oil can be converted into a high-quality energy source.

In addition, the composition and characteristics of the pyrolysis oil are the same as those exemplified in the description of the polishing pad.

The temperature at which the polishing layer is pyrolyzed to obtain the pyrolysis oil may be, for example, 280°C to 350°C, specifically, 280°C to 345°C, 290°C to 340°C, 295°C to 330°C, 300°C to 325°C, or 310°C to 320°C. In addition, the time for which the polishing layer is pyrolyzed to obtain the pyrolysis oil may be, for example, 1 hour to 10 hours, specifically, 2 hours to 9 hours, 3 hours to 9 hours, 4 hours to 8 hours, 5 hours to 7 hours, 5 hours to 6 hours, or 6 hours to 7 hours. As a specific example, the pyrolysis oil may be obtained by pyrolyzing the polishing layer at 280°C to 350°C for 3 hours to 9 hours.

Meanwhile, when the pyrolysis of the polishing layer is completed, residual solids remain, which may be used as solid fuel.

The pyrolysis oil is obtained from the polishing layer of the polishing pad described above. In such a case, the polishing pad may be a spent polishing pad that has been used in a CMP process. Accordingly, the embodiment can improve the conventional problem of difficulty in recycling waste polishing pads. Further, it may contribute to providing renewable energy and reducing environmental problems.

The pyrolysis oil is obtained by pyrolyzing the polishing layer of the polishing pad. Fig. 2 illustrates a process for obtaining pyrolysis oil through pyrolysis of a polishing pad. Referring to Fig. 2, the process for preparing pyrolysis oil comprises charging a polishing layer (10) of a polishing pad into a chamber (100) (step S-1); pyrolyzing the polishing layer (10) charged into the chamber (100) at 280°C to 350°C (step S-2); and passing the vaporized stream formed by the pyrolysis through a heat exchanger (200) to obtain liquid pyrolysis oil (step S-3).

Step S-1 may be carried out by charging a polishing layer, specifically, a polishing layer of a spent polishing pad, into a chamber. That is, a polishing layer of a spent polishing pad that has been used in a CMP process may be charged into the chamber. Here, when the spent polishing pad further comprises a support layer and an adhesive layer in addition to a polishing layer (in which the polishing layer, adhesive layer, and cushion layer are combined), the respective layers are separated, and the polishing layer alone may be charged into the chamber. In addition, one or more polishing layers, specifically, 1 to 5 or 2 to 3 polishing layers, may be charged into the chamber at the same time. Accordingly, the embodiment can easily recycle (treat) the spent polishing pads.

The chamber is mounted on a reactor capable of performing the pyrolysis of the polishing layer, and it may be made of a heat-resistant material. It may have a structure that is detached from the reactor when the pyrolysis is completed.

Step S-2 may be carried out by pyrolyzing the polishing layer charged into the chamber at 280°C to 350°C. Specifically, the pyrolysis temperature of the polishing layer may be 280°C to 345°C, 290°C to 340°C, 295°C to 330°C, 300°C to 325°C, or 310°C to 320°C. As the polishing layer is pyrolyzed in the above temperature range, pyrolysis oil can be obtained in high yield, and the generation of harmful substances such as dioxin during the pyrolysis process can be minimized. In addition, the pyrolysis oil can be controlled to contain chlorine components at the required level.

Meanwhile, the pyrolysis of the polishing layer may be carried out in the presence of a catalyst. The catalyst is not particularly limited as long as it is a commonly known catalyst used in the pyrolysis process of polymers. Specifically, it may comprise zeolite or potassium hydroxide. As the pyrolysis is carried out in the presence of the catalyst, the yield of pyrolysis oil can be increased while the production of by-products such as tar can be suppressed.

As step S-2 is carried out, the pyrolysis oil may be vaporized and converted into a vaporized stream.

Step S-3 may be carried out by passing the vaporized stream formed by the pyrolysis through a heat exchanger to obtain liquid pyrolysis oil. Specifically, the vaporized stream may be cooled through the heat exchanger to be converted into liquid pyrolysis oil. The heat exchanger may not be particularly limited as long as it is made of a commonly known structure and material.

Meanwhile, the solids remaining in the chamber upon completion of step S-3 may be used as solid fuel through a separate recovery process. In addition, the pyrolysis oil obtained through step S-3 may be subjected to a refining process such as distillation.

As the content of residual chlorine components contained in the pyrolysis oil is adjusted to the specific range, it can be converted into a high-quality energy source.

Fig. 3 illustrates a process for obtaining energy sources and basic raw materials from pyrolysis oil. Referring to Fig. 3, the pyrolysis oil obtained by pyrolyzing the polishing layer can be converted into heavy oil, naphtha, or the like through a refining process in, for example, a distillation tower (300). In such an event, the heavy oil may be used as an energy source such as heating oil and power plant fuel. In addition, the naphtha can be converted into basic petrochemical raw materials such as benzene, toluene, xylene, butanediol, or the like through a cracking process and used in the industry.

### Mode for the Invention

Although the following examples are provided, the scope of possible implementations is not limited thereto.

### Example 1

### Step (1) Preparation of a urethane-based prepolymer

A four-necked flask was charged with 2,4-toluene diisocyanate (2,4-TDI), 2,6-toluene diisocyanate (2,6-TDI), dicyclohexylmethane diisocyanate (H12MDI), polytetramethylene ether glycol (PTMEG), and diethylene glycol (DEG), followed by reaction thereof at 80°C for 3 hours, thereby preparing a urethane-based prepolymer having a content of NCO end groups (NCO%) of 10% by weight.

### Step (2) Preparation of a polishing layer

A casting machine equipped with tanks and feeding lines for the raw materials such as a prepolymer, a curing agent, an inert gas, and a foaming agent was provided. The urethane-based prepolymer prepared above, a curing agent (DMTDA, Covestro), a solid phase foaming agent (F-65DE, Matsumoto), an inert gas (N₂), and a silicone-based surfactant (Evonik) were each charged to the tanks. Specifically, 32 parts by weight of the curing agent, 1 part by weight of the solid phase foaming agent, and 1 part by weight of the surfactant were charged relative to 100 parts by weight of the prepolymer, and the inert gas was fed at 1.5 L/minute.

The raw materials were stirred while they were fed to the mixing head at constant rates through the respective feeding lines. The rotation speed of the mixing head was about 5,000 rpm. The mixture composition of the raw materials mixed in the mixing head was then injected into a mold having a width of 1,000 mm, a length of 1,000 mm, and a height of 3 mm. The temperature of the mold was adjusted to about 80 (±5)°C. The mixture composition was solidified in the mold to be cast into a sheet. The sheet was post-cured at about 110 (±5)°C for about 18 hours to prepare a polishing layer.

### Step (3) Preparation of a polishing pad

One side of the polishing layer was subjected to lathe turning using a cutting tool and grooved using a tip to have an average thickness of 2 mm. A polyester fiber nonwoven fabric was impregnated with a polyurethane resin to prepare a cushion layer. A heat-sealing adhesive was applied to one side of the cushion layer and to the side of the polishing layer opposite to the polishing surface, respectively. The cushion layer and the polishing layer were laminated such that the sides to which the heat-sealing adhesive had been applied were in contact, which was then pressed using a pressing roller at a temperature of about 140 (±5)°C and a pressure of 2 kgf/cm² to prepare a polishing pad.

### Example 2

The same procedure as in Example 1 was repeated, while a casting machine equipped with tanks and feeding lines for the raw materials such as a prepolymer, a curing agent, an inert gas, and a foaming agent was provided for step (2). The urethane-based prepolymer prepared above, a curing agent (DMTDA, Covestro), a solid phase foaming agent (051DET40d25, Nouryon), an inert gas (N₂), and a silicone-based surfactant (Evonik) were each charged to the tanks. The subsequent procedure was carried out in the same manner as in Example 1 to prepare a polishing pad.

### Example 3

The same procedure as in Example 1 was repeated, while a casting machine equipped with tanks and feeding lines for the raw materials such as a prepolymer, a curing agent, an inert gas, and a foaming agent was provided for step (2). The urethane-based prepolymer prepared above, a curing agent (DMTDA, Covestro), a solid phase foaming agent (F-80DE, Matsumoto), an inert gas (N₂), and a silicone-based surfactant (Evonik) were each charged to the tanks. The subsequent procedure was carried out in the same manner as in Example 1 to prepare a polishing pad.

### Comparative Example 1

The same procedure as in Example 1 was repeated, while a casting machine equipped with tanks and feeding lines for the raw materials such as a prepolymer, a curing agent, an inert gas, and a foaming agent was provided for step (2). The urethane-based prepolymer prepared above, a curing agent (MOCA, Ishihara), a solid phase foaming agent (051DET40d25, Nouryon), an inert gas (N₂), and a silicone-based surfactant (Evonik) were each charged to the tanks. The subsequent procedure was carried out in the same manner as in Example 1 to prepare a polishing pad.

### Comparative Example 2

The same procedure as in Example 1 was repeated, while a casting machine equipped with tanks and feeding lines for the raw materials such as a prepolymer, a curing agent, an inert gas, and a foaming agent was provided for step (2). The urethane-based prepolymer prepared above, a curing agent (MOCA, Ishihara), a solid phase foaming agent (461DET40d25, Nouryon), an inert gas (N₂), and a silicone-based surfactant (Evonik) were each charged to the tanks. The subsequent procedure was carried out in the same manner as in Example 1 to prepare a polishing pad.

### Test Example 1

The polishing layers, support layers, and polishing pads in which they had been laminated as prepared above were each tested as follows.

### (1) Hardness

Each sample was cut to 5 cm × 5 cm (thickness: 2 mm) and stored at room temperature and a temperature of 30°C, 50°C, and 70°C, respectively, for 12 hours to measure the Shore D hardness and Asker C hardness using a hardness tester.

### (2) Specific gravity

Each sample was cut to 2 cm × 5 cm (thickness: 2 mm) and stored at a temperature of 25°C for 12 hours to measure the specific gravity using a gravimeter.

### (3) Tensile strength

Each sample was cut to 4 cm × 1 cm (thickness: 2 mm). The ultimate strength immediately before the fracture was measured while the sample was tested at a rate of 50 mm/minute using a universal testing machine (UTM).

### (4) Elongation

Each sample was cut to 4 cm × 1 cm (thickness: 2 mm). The maximum deformation immediately before the fracture was measured while the sample was tested at a rate of 50 mm/min using a universal testing machine (UTM). The ratio of the maximum deformation to the initial length was expressed in percent (%).

The results are shown in the tables below.

**[Table 1]**

| | | Ex. 1 | Ex. 2 | Ex. 3 | C. Ex. 1 | C. Ex. 2 |
|---|---|---|---|---|---|---|
| Polishing layer | Thickness (mm) | 2 | 2 | 2 | 2 | 2 |
| | Hardness (Shore D) | 58.8 | 59.2 | 59.1 | 58.9 | 59.3 |
| | Specific gravity (g/cc) | 0.79 | 0.79 | 0.79 | 0.79 | 0.79 |
| | Tensile strength (N/mm²) | 20.9 | 20.8 | 20.4 | 20.5 | 20.6 |
| | Elongation (%) | 111 | 108 | 109 | 101 | 109 |
| Support layer | Type | Nonwoven fabric | Nonwoven fabric | Nonwoven fabric | Nonwoven fabric | Nonwoven fabric |
| | Thickness (mm) | 1.1 | 1.1 | 1.1 | 1.1 | 1.1 |
| | Hardness (Asker C) | 70 | 70 | 70 | 70 | 70 |
| Laminated pad | Thickness (mm) | 3.32 | 3.32 | 3.32 | 3.32 | 3.32 |
| | Compressibility (%) | 1.05 | 1.05 | 1.05 | 1.05 | 1.05 |

As shown in the table above, the polishing pads of Examples 1 to 3 were at least equal to the polishing pads of Comparative Examples 1 and 2 in terms of hardness, specific gravity, tensile strength, and elongation.

### Test Example 2: Analysis of components

The polishing layer of the polishing pad prepared in each of the Examples and Comparative Examples, and the pyrolysis oil obtained therefrom, were analyzed as follows.

### (1) Chlorine content (polishing pad)

A circular sample having a size of 3 cm in diameter and 0.3 cm in height was prepared from the polishing layer of the polishing pad. The content of chlorine in each polishing layer was measured by IEC 62321-3-2, which is an international standard for measuring the content of a specific substance by combustion-ion chromatography (C-IC).

### (2) Chlorine content (pyrolysis oil)

The polishing layer of each polishing pad was separated and charged into a chamber, and the polishing layer was pyrolyzed at a temperature of 320°C for 6 hours. The vaporized stream formed by the pyrolysis was passed through a heat exchanger to obtain liquid pyrolysis oil. Thereafter, when the liquid pyrolysis oil stream disappeared, the production of pyrolysis oil was completed through a cooling process. The pyrolysis oil thus prepared was charged into a sample container. The content of chlorine in the pyrolysis oil was measured by IEC 62321-3-2, which is an international standard for measuring the content of a specific substance by combustion-ion chromatography (C-IC).

### (3) Elemental analysis

The elements in the pyrolysis oil of the polishing layer obtained in the same manner as in section (2) above were analyzed. The FLASH 2000 CHNS/O analyzer (elemental analyzer, Thermo Fisher Scientific) was used to analyze the elemental content of C, H, N, S, and O, excluding halogens (F, Cl), through combustion at 1,800°C. The generated gas was quantitatively analyzed for the content of sulfur (S) element through a GC column.

### (4) Content of inorganic substances: ICP-OES

The content of inorganic substances in the pyrolysis oil of the polishing layer obtained in the same manner as in section (2) above was measured. A sample of the pyrolysis oil was placed in ICP-OES (5110 SVDV, Agilent) and made into an atomic or ion-excited state using argon plasma. In such an event, the intensity of light emitted when the electrons of atoms or ions return to the ground state or low state was measured. Thereafter, the content of inorganic substances (Al, Si, and Fe) in the pyrolysis oil was quantitatively analyzed based on the calibration graph.

**[Table 2]**

| | Component | Ex. 1 | Ex. 2 | Ex. 3 | C. Ex. 1 | C. Ex. 2 |
|---|---|---|---|---|---|---|
| Polishing layer | Cl (ppm) | 36 | 32 | 33 | 28,614 | 54,786 |
| Pyrolysis oil | Cl (ppm) | 5 | 7 | 3 | 14,181 | 39,862 |
| | S (%) | 4.8 | 4.9 | 4.8 | 0 | 0 |
| | Al (ppm) | 3 | 2 | 2 | 3 | 3 |
| | Fe (ppm) | 4 | 4 | 3 | 4 | 3 |
| | Si (ppm) | 898 | 1,135 | 840 | 1,160 | 1,187 |

As can be seen from the above table, the content of chlorine (Cl) in the polishing layer of the polishing pad in each of Examples 1 to 3, and the pyrolysis oil obtained therefrom, was measured to be within the desirable range. In addition, in the pyrolysis oil obtained from the polishing layer of the polishing pads in each of Examples 1 to 3, the content of sulfur (S), aluminum (Al), iron (Fe), and silicon (Si) were each measured to be within the desirable range.

### Test Example 3: Evaluation of CMP process

The polishing pads prepared above were each tested as follows.

### (1) Polishing rate (removal rate)

A silicon wafer having a diameter of 300 mm on which silicon oxide had been deposited by a CVD process was set on the porous polyurethane polishing pad mounted on the platen in a CMP polishing machine, while the silicon oxide layer of the silicon wafer faced downward. Then, the silicon oxide layer was polished under a polishing load of 4.0 psi while the polishing pad was rotated at a speed of 150 rpm, a calcined ceria slurry was supplied onto the polishing pad at a rate of 250 ml/minute, and the platen was rotated at a speed of 150 rpm for 60 seconds. Upon completion of the polishing, the silicon wafer was detached from the carrier, mounted in a spin dryer, washed with deionized water (DIW), and then dried with nitrogen for 15 seconds. The film thickness of the dried silicon wafer was measured before and after the polishing using a spectral reflectometer-type thickness measuring instrument (manufacturer: Keyence, model: SI-F80R).

Thereafter, the polishing rate was calculated using the following Equation 1. Polishing rate (A/minute) = difference in thickness before and after polishing (Å) / polishing time (minute)

### (2) Defects

Polishing was carried out in the same manner as the polishing rate test using a CMP polishing machine. Upon completion of the polishing, the silicon wafer was transferred to a cleaner and cleaned for 10 seconds each using 1% HF, and deionized water (DIW), 1% H₂NO₃. Thereafter, it was transferred to a spin dryer, washed with deionized water (DIW), and then dried with nitrogen for 15 seconds. The change in defects of the dried silicon wafer before and after the polishing was measured using a defect measurement device (manufacturer: Tenkor, model: XP+). Specifically, the total number of scratches, chatter marks, pits, and residues on the surface of the wafer was measured.

### (3) Debris size (D50 particle size)

### (a) Obtaining an aqueous solution of debris

A porous polyurethane polishing pad was attached to the platen of a CMP polishing machine. Thereafter, excluding the operation of the carrier, the debris of the polishing layer was collected using only the conditioner and deionized water (DIW). Conditioning of the polishing layer was carried out for a disc of CI45 (pad cut rate of 80 to 90, Saesol) while deionized water was supplied at 300 cc/minute under the conditions of a platen speed of 93 rpm, a conditioner load of 9 lbs, a rotation speed of 64 rpm, and a sweep speed of 19 times/minute. The debris of the polishing layer formed after 10 minutes of conditioning was collected in the form of a solution mixed with deionized water, thereby obtaining 300 ml of an aqueous solution of debris.

### (b) pH adjustment and analysis of the particle size of debris

The aqueous solution of debris had a pH at a level of 6.0 to 6.5, and the pH was adjusted to 5.5 using an aqueous nitric acid solution. Here, the concentration of the aqueous nitric acid solution used was 35%. The D50 particle size of debris in the aqueous solution of debris was measured using a particle size analyzer (Mastersize 3000, Malvern) and a medium-capacity automatic disperser (Hydro MV, Malvern). The analyzer was set with a polyurethane of 1.55 as the refractive index of a material to be analyzed, deionized water of 1.33 as the refractive index of a dispersant, and a stirring speed of 2,500 rpm.

The results are shown in the Table below.

**[Table 3]**

| | Unit | Ex. 1 | Ex. 2 | Ex. 3 | C. Ex. 1 | C. Ex. 2 |
|---|---|---|---|---|---|---|
| Polishing rate for an oxide film with a ceria slurry | Å/min | 2,412 | 2,388 | 2,398 | 2,403 | 2,401 |
| Defect/scratch | count | 5 | 7 | 3 | 25 | 28 |
| Debris particle size | µm | 17.1 | 16.8 | 16.5 | 25.2 | 27.3 |

As can be seen from the table above, in the polishing pads of Examples 1 to 3, the performance thereof such as polishing rate was equal to, or higher than, that of Comparative Examples 1 and 2. In particular, the debris size of the polishing pads of Examples 1 to 3 was measured to be smaller than that of Comparative Examples 1 and 2, and the number of defects and scratches in Examples 1 to 3 was measured to be significantly lower than that of Comparative Examples 1 and 2.

## Claims

1. A polishing pad, which comprises a polishing layer, wherein, when pyrolysis oil obtained by pyrolyzing the polishing layer at 320°C for 6 hours is analyzed by combustion-ion chromatography (C-IC) in accordance with the IEC 62321-3-2 standard, the content of chlorine (Cl) is less than 10,000 ppm.

2. The polishing pad of claim 1, wherein, when the pyrolysis oil is analyzed by combustion-ion chromatography (C-IC) in accordance with the IEC 62321-3-2 standard, the content of chlorine (Cl) is 1 ppm to 100 ppm.

3. The polishing pad of claim 1 or 2, wherein, when the pyrolysis oil is analyzed using an inductively coupled plasma-optical emission spectrometer (ICP-OES), the total content of metal components is 1 ppm to 3,000 ppm.

4. The polishing pad of any of claims 1 to 3, wherein, when the pyrolysis oil is analyzed using an elemental analyzer, the content of sulfur (S) is 1 ppm to 100 ppm.

5. The polishing pad of any of claims 1 to 4, wherein, when the pyrolysis oil is analyzed using an ICP-OES, the content of aluminum (Al) and that of iron (Fe) are each 1 ppm to 50 ppm.

6. The polishing pad of any of claims 1 to 5, wherein, when the pyrolysis oil is analyzed according to the ASTM D2887 standard, the initial boiling point is 10°C to 50°C, and the final boiling point is 400°C to 500°C.

7. The polishing pad of any of claims 1 to 6, wherein the polishing layer comprises a polyurethane resin, the polyurethane resin is formed from a composition that comprises a urethane-based prepolymer, a foaming agent, and a curing agent, and the urethane-based prepolymer has an isocyanate end group content (NCO%) of 7.5% by weight to 12% by weight.

8. The polishing pad of claim 7, wherein the foaming agent comprises a solid phase foaming agent, the solid phase foaming agent comprises at least one selected from the group consisting of an acrylonitrile-based copolymer, a methyl methacrylate-based copolymer, a methacrylonitrile-based copolymer, and an acrylic-based copolymer, and
the curing agent comprises at least one selected from the group consisting of diethyltoluenediamine (DETDA), 3,5-dimethylthio-2,6-diaminotoluene (DMTDA), 1,3-propanediol bis(4-aminobenzoate) (PDPAB), N,N'-bis(sec-butylamino)diphenylmethane, 2,6-bis(methylthio)-4-methyl-1,3-benzenediamine, 4-(4-aminobenzoyl)oxyphenyl 4-aminobenzoate, 4-(4-aminobenzoyl)oxybutyl 4-aminobenzoate, 4-[4-(4-aminobenzoyl)oxy-3-methylbutoxy]butyl 4-aminobenzoate, and methylene bis-methylanthranilate (MBNA).

9. The polishing pad of any of claims 1 to 8, wherein the polishing layer has a hardness of 50 Shore D to 65 Shore D, a tensile strength of 15 N/mm² to 25 N/mm², and an elongation of 90% to 130%.

10. The polishing pad of any of claims 1 to 9, wherein, when the silicon oxide layer of a silicon wafer is polished with a ceria slurry using the polishing pad, the polishing rate according to the following equation is 2,200 Å/minute to 2,600 Å/minute: Polishing rate (A/minute) = difference in thickness before and after polishing (Å) / polishing time (minute).

11. Pyrolysis oil, which is obtained from a polishing layer of the polishing pad of any of claims 1 to 10, wherein, when the pyrolysis oil is analyzed by combustion-ion chromatography (C-IC) in accordance with the IEC 62321-3-2 standard, the content of chlorine (Cl) is less than 10,000 ppm.

12. The pyrolysis oil of claim 11, wherein the polishing pad is a spent polishing pad that has been used in a CMP process.

13. The pyrolysis oil of claim 11, wherein the pyrolysis oil is obtained by pyrolyzing the polishing layer at 280°C to 350°C for 3 hours to 9 hours.
